Europäisches Patentamt

European Patent Office

Office européen des brevets

(11) Publication number: **0 265 031**
**B1**

(12) **EUROPEAN PATENT SPECIFICATION**

(45) Date of publication of patent specification: **23.01.91**

(51) Int. Cl.⁵: **C 02 F 1/32, B 01 J 49/00**

(21) Application number: **87302476.4**

(22) Date of filing: **23.03.87**

(54) **Apparatus and method for conditioning water.**

(30) Priority: **22.10.86 US 922732**

(43) Date of publication of application:
**27.04.88 Bulletin 88/17**

(45) Publication of the grant of the patent:
**23.01.91 Bulletin 91/04**

(84) Designated Contracting States:
**AT BE CH DE ES FR GB IT LI NL**

(56) References cited:
**DE-A-1 937 126**
**DE-A-3 020 170**
**US-A-3 958 941**

(73) Proprietor: **AQUAFINE CORPORATION**
**25230 W Avenue Stanford St**
**Valencia California 91355 (US)**

(72) Inventor: **Veloz, Thomas M.**
**15857 Beaver Run Road**
**Canyon Country California 91351 (US)**

(74) Representative: **Williams, Trevor John et al**
**J.A. KEMP & CO. 14 South Square Gray's Inn**
**London WC1R 5EU (GB)**

Courier Press, Leamington Spa, England.

## Description

This invention relates to a method of and a system for reducing the organics in an ion exchange resin column used to condition water.

The water used in laboratory experiments and in many industrial processes, such as the manufacture of electronic components and computer chips, cooling for nuclear reactors, and the like, must be of as high a purity as possible or at least the water must be devoid of those impurities which adversely affect the laboratory experiments or industrial processes. Numerous types of filters of varying efficiencies have been developed for removing objectionable particulate matter. Ion exchangers of various types have been used for deionizing the water. Various additives and processes have been used for reducing or destroying the bacteria content of the water. However, the effective removal of organic impurities from the process water generally has been unsatisfactory. The organic impurities, usually referred to as Total Organic Carbon ("TOC") or Total Oxidizable Carbon, may result from any number of sources such as decaying vegetation, industrial solvents, oil, ion exchange systems, etc. While certain levels of TOC in water may be acceptable in many processes, there are processes in which it is detrimental or even unacceptable. Moreover, the presence of high levels of TOC may interfere with other water conditioning processes.

The function of the present invention, as will be described more fully below, is to condition or recondition ion exchange resins used in water purification systems. An ion exchanger is used for the deionisation of water, namely, in removing the objectionable anions and cations from the water. There are various types of ion exchangers that use synthetic resins (polymers) of various types to produce the desired deionisation. The resin forms a bed of "plastic sand" in a vessel through which the water is passed for treatment and, because of the shape, the ion exchanger is often referred to as a "resin column". It is such a known system for purifying water which forms the basis for the prior art portion of claim 7. After a period of use of a resin column, the resin must be regenerated or discarded if it cannot be regenerated effectively, and in any event after numerous regeneration cycles it must be replaced. For regeneration, the appropriate type chemicals are passed through the resin column to reverse the chemical processes which accomplished the deionisation whereby the resin is returned to a composition which is again capable of accomplishing the desired deionisation. During normal use, resin columns also accumulate organic impurities which tend to coat the resin and reduce the effectiveness of the resin in deionising the water. The chemicals used in regenerating the resin for returning its deionising capability normally do not significantly reduce the organics accumulated on the resins. In some instances, relatively pure water is passed through resin columns in an attempt to rinse the organic impurities from the resin columns but this consumes substantial quantities of water.

US—A—3 958 941, the disclosure of which forms the basis for the prior art portion of claim 1, discloses a method in which water passed through an ion exchange cartridge has organic material removed therefrom in an oxidising chamber provided with an ultraviolet lamp. Once so purified, the water has a limited quantity of water to be tested added thereto for circulating through the oxidation chamber but not the ion exchange cartridge with the carbon dioxide produced being measured as to quantity in order to quantify the amount of organic material which had been present in the water being tested. This does not assist in solving the problem of improving the operation of a water purifying system using ion exchange resin purification by conditioning resin which has been contaminated with organic material in a simple and efficient manner as is done by the present invention as defined by the method of claim 1.

The system of the invention as defined by claim 7 solves this problem by providing a water purification system in which ion exchange columns are reconditioned to remove the organic impurities therein by a closed-loop circulation of water through the resin column and an ozidation chamber for intensely exposing the water to substantially 185 nm ultraviolet light to convert the organic impurities to primarily carbon dioxide which in turn is removed by the resin, until substantially all of the organic impurities have been rinsed from the resin and reduced to carbon dioxide.

Other and more detailed objects and advantages of this invention will be apparent to those skilled in the art from the following description and the accompanying drawing, wherein:

Fig. 1 is a perspective view of a preferred embodiment of the ultraviolet light apparatus as used with this invention;

Fig. 2 is an enlarged sectional elevation view of the apparatus of Fig. 1 taken on the line 2—2;

Fig. 3 is a schematic illustration of a system using the apparatus of Figs. 1 and 2 for TOC reduction of ion exchange resin columns; and

Fig. 4 is a schematic illustration of a system using the apparatus of Figs. 1 and 2 for TOC reduction in water used in an industrial process for allowing reuse of the water.

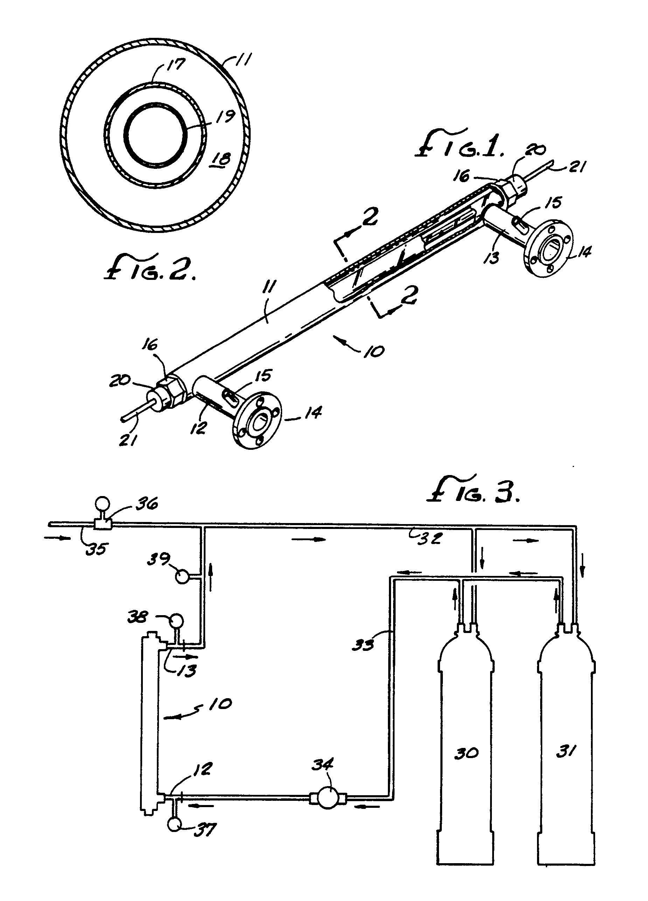

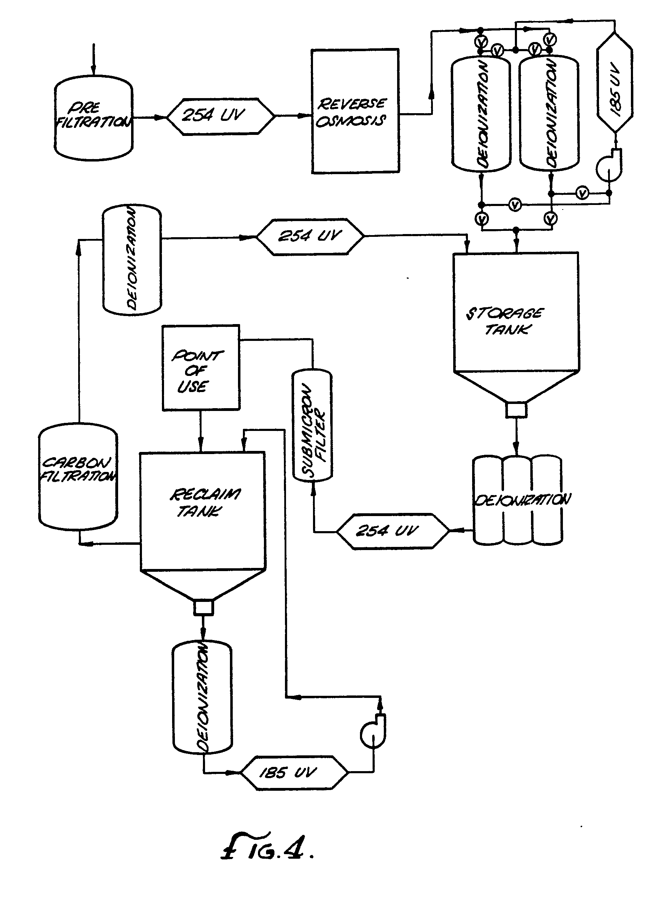

Referring now to the apparatus shown in Figs. 1 and 2, the TOC reduction unit, generally designated 10, includes an elongated cylinder 11 with a laterally extending pipe 12 mounted on the side at one end of the cylinder 11 and a second laterally extending pipe 13 mounted at the other end of the cylinder 11. The pipes 12 and 13 communicate with the interior of cylinder 11 to form an inlet and an outlet, respectively, to and from the cylinder. Each pipe 12 and 13 is provided with a means for connecting the pipe into a water circulating system and such means may comprise a flange 14 of a conventional type. Further, each pipe 12 and 13 includes a branch pipe 15 for the convenient connection of meters, sampling equipment, or the like for monitoring the properties of the water flowing into and out of the unit 10, or for the connection of fittings to allow the addition of oxygen or other oxidation enhancing additives to the water flowing into the cylinder 11.

Each end of the elongated cylinder 11 is provided with an axially extending threaded fitting on which a compression nut 16 may be threadedly mounted. A quartz tube or sleeve 17 of a quality to transmit 185 nm light is positioned in the cylinder 11 and extends out each end for engagement by the compression nut 16 to connect and seal the quartz sleeve to the cylinder 11 in a conventional manner. By this conventional arrangement an annular shaped fluid chamber 18 is formed between the quartz sleeve 17 and the cylinder 11 for the passage of the water from inlet pipe 12 to outlet pipe 13 through the entire length of the cylinder 11. The mounting of the quartz sleeve 17 to the cylinder 11 by the compression nut 16 on each end results in a tubular passage through the length of the unit 10, which passage is opened at both ends. An ultraviolet light lamp 19 is positioned in the tubular passage formed by quartz sleeve 17 and electric lamp sockets 20 are adapted to be connected to each end of the lamp 19. There are a number of different types of conventional connections for the end of ultraviolet lamps in arrangements similar to this structure but it is preferred that the lamp socket 20 be of a size, shape and material to support the lamp 19 from each end and substantially center the lamp 19 within the quartz sleeve 17. By applying appropriate electrical power through wires 21 connected to each lamp socket 20 the ultraviolet light lamp 19 may be illuminated.

While the above described structure is similar to many conventional devices for the ultraviolet treatment of water and other fluids, there are some details of construction that are preferred for the TOC reduction unit 10. Specifically, it has been found that for a presently conventional ultraviolet lamp of the low pressure type the fluid chamber 18 is preferably of a relatively narrow radial thickness, such as 1.27 cm (one half inch) or less whereby the ultraviolet light emanating from lamp 19 is highly concentrated in the water flowing through chamber 18 rather than such ultraviolet light being diffused and required to pass through a greater depth of water before reaching the surrounding cylinder 11 as would occur if the cylinder 11 were substantially larger. For example, in many conventional ultraviolet water purification units of this type the annular water chamber is approximately 2.54 cms (one inch) thick radially. The small radial dimension of the annular oxidation chamber 18 maintains the intensity of the 185 nm light at a substantial level throughout the radial depth of the water within the water chamber thus allowing substantial oxidation of organic material despite absorption of the 185 nm light by the water.

The ultraviolet light lamp 19 is preferably of a type to produce a significant portion of substantially 185 nm wavelengths which is particularly suitable for producing the photodecomposition of the organics in the water although it is to be understood that the present invention is not limited to and does not exclude the use of ultraviolet light of different wavelengths that will produce adequate photodecomposition of the organics in water. The use of ultraviolet light in this range for analyzing the TOC in water in complex testing equipment is well known from U.S. Patent No. 3,958,941. As noted previously, the photochemical oxidization of organic material in water by the use of ultraviolet light produces primarily carbon dioxide in the water which is harmless in many experiments and industrial processes.

The apparatus shown in Figs. 1 and 2 uses a standard length ultraviolet lamp of approximately 76 cms (30") but it is to be understood that different lengths and configurations of lamps could be used, or multiple lamps could be used in a single vessel of a larger diameter. Also for more rapid or intense water treatment, two or more units can be connected in series in a system. Further, the 76 cm (30") lamp 19 that has been used in experiments is a low pressure type using 40 watts of power that it is believed to produce about 13.8 ultraviolet watts and only about 5% of 185 nm light and 95% of 254 nm light, whereas it would be preferable that a greater percentage of 185 nm light be produced and it is believed that such a lamp can be developed. Also, applicant is aware of high pressure and medium pressure ultraviolet light lamps as produced by Hanovia Ltd. (HK), Phillips B.V. (Holland), Brown Boveri S.A. (Switzerland and others, that are currently used for bacteria control in Europe and The United Kingdom, which lamps use substantially higher wattage, for example 1850 watts of power, and produce substantially higher ultraviolet light output that may be useful in the present invention. With higher levels of output of 185 nm ultraviolet light it is anticipated, although it has not been tested by applicant as yet, that the acceptable depth of water in the treatment chamber can be substantially larger than the 1.27 cm (1/2") radial depth described above without sacrificing the intensity desired for effective operation.

The presence of oxygen dissolved in the water is believed to influence the production of the OH free radical and various other highly reactive chemical radical species which affect substantial oxidation of organic carbon to primarily carbon dioxide in the process performed by this invention. Thus, it is believed that any step in the process that can beneficially influence the production of such reactive chemical radical species will advantageously influence the process of the present invention.

It has also been found that the presence of certain material in contact with the water during the oxidation process can also substantially enhance the organic carbon oxidation process. One such material is titanium whereby making the cylinder 11 of titanium or lining it with titanium has been found to enhance the oxidation of the organic carbons to primarily carbon dioxide.

Referring now to Fig. 3, a system is illustrated for conditioning or reconditioning ion-exchange resin columns by the use of the TOC reduction unit 10 illustrated in Figs. 1 and 2. Two ion exchange resin columns 30 and 31 are illustrated as being connected in parallel between an inlet conduit 32 and an outlet conduit 33 but the system is equally applicable for use with a single resin column, or more than two resin columns, or connected in series between the conduits 32 and 33. A pump 34 is provided for circulating water from outlet conduit 33 to inlet pipe 12 on the unit 10 and an inlet conduit 32 is connected from outlet pipe 13 of the unit 10 to the resin columns 30 and 31. A water supply pipe 35 is preferably connected through a pressure regulator 36 to pipe 32 for supplying deionized water to the system for the start-up of the conditioning or reconditioning cycle for the resin columns 30 and 31 after all of the piping connections have been made. With the ultraviolet light lamp 19 illuminated, the water is circulated continuously and repeatedly through the resin columns 30, 31 and the TOC reduction unit 10 to rinse organic material from the resin columns 30, 31 for passing through the unit 10 to photochemically oxidize the organics to primarily carbon dioxide which dissolves in the water and is returned to and removed by the resin in the resin columns 30 and 31. Other products in addition to carbon dioxide also may be formed by the photochemical oxidation. These other products are also removed by the ion-exchange resin in the resin columns 30 and 31. This recirculation of water is continued until a sufficiently low level of TOC in the resin columns is achieved. Organic material is found even in new resin columns in moderate amounts and can be substantially reduced or eliminated by this system. Organic impurities (TOC) may be found in very substantial quantities in a used resin column to the degree that the TOC adversely affects or fouls the resin and prevents proper deionization but the TOC may be substantially reduced and virtually eliminated by this ultraviolet reconditioning system.

For example, tests have been conducted with the TOC reduction unit 10 of the above described construction shown in Figs. 1 and 2 used in a system as illustrated in Fig. 3 having five newly regenerated deionization resin columns connected in parallel. In one such test employing a water flow rate of 200 litres per minute per cubic metre (one and one-half US gallons per minute per cubic foot) of resin the TOC was reduced from a starting level of approximately 700 ppb (parts per billion) to approximately 400 ppb (parts per billion) in the first hour of water recirculation, to approximately 300 ppb in the second hour, to approximately 15 ppb in the next fourteen hours, and finally to the virtually negligible level of 1.5 ppb after thirty-eight hours. In another similar test of reconditioning five deionization tanks connected in parallel in this system at a slower rate of 134 litres per minute per cubic metre (one US gallon per minute per cubic foot) of resin, similar results were achieved in reducing the organics from approximately 750 ppb to 400 ppb in the first hour, to 250 ppb in the next two hours, to a level of about 14 ppb after a total of sixteen hours and finally to a level of 2.7 ppb after a total of forty hours.

Referring again to Fig. 3, appropriate instrumentation may be provided for monitoring the operation of this system to determine when the TOC is of a sufficiently low level for the desired purposes. A resistivity meter 37 may be provided on the inlet pipe 12 of the unit 10 by mounting the meter on the aforedescribed branch conduit 15. A second resistivity meter 38 may be similarly mounted on the outlet pipe 13. In this manner the resistivity of the water may be measured at the inlet and outlet of the unit 10 to monitor the changes in resistivity of the water, which in turn provides an indication of dissolved carbon dioxide that can be related to the TOC, although not as a direct reading. Further, a TOC monitor 39 may be installed in conduit 32 for monitoring the actual TOC which is preferable but such meters are substantially more expensive than resistivity meters. Thus, it is believed that appropriate monitoring by the less expensive resistivity meters 37 and 38 should be adequate for most systems.

Referring now to Fig. 4, a typical water supply system for an industrial process is illustrated with the ultra violet light oxidation apparatus employed at two different locations for advantageous improving the water supply system. The water is first introduced from any conventional source 40 into a prefiltration unit 41 for removing particulate matter and then flows through a conventional ultraviolet sterilization unit 42 (that uses 254 nm ultraviolet light) into a reverse osmosis purification unit 43. Normally, the water is then passed through a deionization unit to a storage tank 44 where the water is stored for use. In the system of this invention two indentical deionization units 45 and 46 are provided and connected in parallel with each other with appropriate valving for flow water through one or the other of the units 45 or 46 at one time. A TOC reduction unit 10a is connected to the deionization units 45 and 46 and a pump 47 is provided for selectively circulating water through the TOC reduction unit 10a and one of the deionization units 45 or 46. For example, by opening valves 48 and 52 and closing valves 50 and 54, the water from reverse osmosis unit 43 flows only through deionization unit 45 to the storage tank 44. Further, by closing valves 49 and 53 and opening valves 51 and 55, water can be circulated by pump 47 through TOC reduction unit 10a and deionization unit 46 to reduce the organics in unit 46, similar to the system of Fig. 3. Thus, by periodically switching the positions of the valves 48—55 to and from the aforesaid positions, one deionization unit can be in use for deionizing the water while the other deionization unit is being treated to reduce the organics.

Further with respect to Fig. 4, the clean water from storage tank 44 is then supplied through a multiple column deionization unit 56, another 254 nm ultraviolet sterilizing unit 57, and a submicron filter 58 to the point of use 59 in the industrial process which, for example, may be the washing of computer chip components or the like. The used water is then conducted to a reclaim tank 60 where its purity can be tested and monitored to determine whether it is sufficiently clean to allow reprocessing and reuse or if it must be discarded. If the used water is sufficiently clean to permit reuse, it is supplied through a carbon filtration unit 61, a deionization unit 62, and another sterilizing unit 63 to the storage tank 44. In order to maximize the quality of the water in the reclaim tank 60 to permit its reuse a recirculating system is provided and includes a deionization unit 64, a TOC reduction unit 10b, and a pump 65 whereby the water is continually deionized in unit 64 and the organics in unit 64 and the water are maintained at a low level by the TOC reduction unit 10b. By this system the maximum use and reuse of the water is possible.

**Claims**

1. A method of oxidising organic material which comprises circulating water to carry the organic material through a 185 nm ultraviolet light irradiation in an oxidation chamber (10) to oxidise the carbon in the organic material primarily to carbon dioxide and then passing the water through an ion exchange resin in a vessel (30, 31) to absorb the carbon dioxide, characterised in that the method is used to remove organic material from the ion exchange resin to condition the resin for further use by flushing the organic material from the ion exchange resin with the water which is then passed through the oxidation chamber (10) to produce the carbon dioxide, the circulation of the water being continued until the level of organic material entrained in the water passing from the vessel has fallen to a predetermined desired level.

2. A method according to claim 1, wherein the carbon dioxide is removed from the water by its being adsorbed by the resin.

3. A method according to claim 1 or 2, wherein the TOC level of the water is monitored to determine when said predetermined desired level has been achieved.

4. A method according to claim 2 or 3, wherein the resistivity of the water is monitored for determining when said predetermined desired level has been achieved.

5. A method according to any preceding claim, wherein the water is exposed to a substantial surface area of titanium during the oxidation step while exposed to ultraviolet light.

6. A method according to any preceding claim, wherein the ion exchange resin containing vessel (45) is one of two such vessels (45, 46) and while one (45) of the vessels is being conditioned to remove organic material therefrom, the other vessel (46) is being used to remove contaminants from a separate stream of water to be purified being passed therethrough.

7. A system for purifying water comprising means (40—43, 48, 50, 52, 54) for passing water to be purified through a vessel (46) containing ion exchange resin to remove contaminants therefrom, characterised by the provision of means (10a, 47, 49, 51, 53, 55) for conditioning the ion exchange resin by removal of organic material therefrom, said conditioning means comprising means (47, 49, 51, 53, 55) for flushing purified water through said ion exchange resin at a time when it is disconnected from the means (40, 43, 48, 50, 52, 54) for passing water to be purified therethrough, said flushing means also being arranged for passing water from the resin through an oxidation chamber (10a) and thence back to the resin, said oxidation chamber comprising an ultraviolet lamp (19) adapted to irradiate water passing therethrough with 185 nm ultraviolet light whereby the organic material carried by the water is oxidised primarily to carbon dioxide.

8. A system according to claim 7, wherein said oxidation chamber (10a) is comprised of a cylinder (11) with a transparent sleeve (17) therein for forming an annular passage (18) therebetween for the water, and the ultraviolet lamp (19) is positioned within said sleeve (17).

9. A system according to claim 8, wherein said sleeve (17) is a quartz sleeve.

10. A system according to claim 8 or 9, wherein said annular passage (18) is of a radial thickness from the sleeve to the cylinder of approximately 1.27 cm (1/2") or less for causing intense exposure to ultraviolet light.

11. A system according to claim 10, wherein said ultraviolet lamp (19) is approximately 76 cm (30") long and has an output of about 13.8 ultraviolet watts.

12. A system according to any one of claims 7 to 11, wherein means (37, 38) are provided for measuring and monitoring a characteristic of the circulating water for determining the level of organic material in the water.

13. A system according to any one of claims 7 to 12, wherein said oxidation chamber (11) includes a substantial surface area comprised of titanium to contact the flushing water therein.

14. A system according to any one of claims 7 to 13, wherein two ion exchange resin-containing vessels (45, 46) are provided in parallel, means (48—55) being provided whereby the means for passing water to be purified is operable to pass such water through one of the vessels while the other vessel is being conditioned by the flushing means causing the flushing purified water to circulate therethrough.

**Patentansprüche**

1. Verfahren zur Oxidation von in zirkulierendem Wasser enthaltenem organischen Materials, das durch eine Oxidationskammer (10) transportiert und darin zur Oxidation des im organischen Material enthaltenen Kohlenstoffes, primär in Kohlendioxid, mit 185 nm-UV-Licht bestrahlt wird, wonach das Wasser zur Absorption des Kohlendioxids durch ein Ionenaustauscherharz in einem Kessel (30, 31) durchgeleitet wird, dadurch gekennzeichnet, dass das Verfahren zum Entfernen organischen Materials aus dem Ionenaustauscherharz zum Konditionieren des Harzes verwendet wird zur weiteren Verwendung durch Spülen des organischen Materials aus dem Ionenaustauscherharz mit dem Wasser, das dann zur Erzeugung des Kohlendioxids durch die Oxidationskammer (10) durchgeleitet wird, wobei die Zirkulation des Wassers fortgesetzt wird, bis das Niveau des organischen Materials, das in das von Kessel durchgeleitete Wasser eingeladen ist, auf ein bestimmtes gewünschtes Niveau gefallen ist.

2. Verfahren nach Anspruch 1, dadurch gekennzeichnet, dass das Kohlendioxid aus dem Wasser entsprechend seiner Absorption durch das Harz entfernt wird.

3. Verfahren nach Anspruch 1 oder 2, dadurch gekennzeichnet, dass das TOC-Niveau des Wassers angezeigt wird, um festzustellen, wenn das vorbestimmte gewünschte Niveau erreicht worden ist.

4. Verfahren nach Anspruch 2 oder 3, dadurch gekennzeichnet, dass der Widerstand des Wassers angezeigt wird, um festzustellen, wenn das vorbestimmte gewünschte Niveau erreicht worden ist.

5. Verfahren nach einem der vorhergehenden Ansprüche, dadurch gekennzeichnet, dass das Wasser während des Oxidationsvorganges einer Oberfläche aus im wesentlichen Titan ausgesetzt wird, während es UV-Licht ausgesetzt ist.

6. Verfahren nach einem der vorhergehenden Ansprüche, dadurch gekennzeichnet, dass der Ionenaustauscherharz enthaltende Kessel (45) einer von zwei solchen Kesseln (45, 46) ist, wobei der eine Kessel (45) zum Entfernen organischen Materials aus ihm konditioniert wird, während der andere Kessel (46) zum Entfernen von Verunreinigungen aus einem getrennten, zu reinigenden, durch ihn durchgeleiteten Wasserstrom verwendet wird.

7. Vorrichtung zur Wasserreinigung mit einer Einrichtung (40—43, 48, 50, 52, 54) zum Durchleiten von zu reinigendem Wasser durch einen Kessel (46), der zur Entfernung von Verunreinigungen aus ihm Ionenaustauscherharz enthält, gekennzeichnet durch eine Einrichtung (10a, 47, 49, 51, 53, 55) zur Konditionierung des Ionenaustauscherharzes durch Entfernung von organischem Material daraus, wobei die Konditionierungseinrichtung eine Einrichtung (47, 49, 51, 53, 55) aufweist zum Spülen gereinigten Wassers durch das Ionenaustauscherharz au einer Zeit wenn sie von der Einrichtung (40, 43, 48, 50, 52, 54) zum Durchleiten von zu reinigendem Wasser unterbrochen ist, die Spüleinrichtung ausserdem zum Durchleiten von Wasser vom Harz durch eine Oxidationskammer (10a) und von dort zurück zum Harz vorgesehen ist, und die Oxidationskammer eine UV-Lampe (19) aufweist zum Bestrahlen von durch die Oxidationskammer durchgeleitetem Wasser mit 185 nm-UV-Licht, so dass das mit dem Wasser transportierte organische Material primär zu Kohlendioxid oxidiert wird.

8. Vorrichtung nach Anspruch 7, dadurch gekennzeichnet, dass die Oxidationskammer (10a) einen Zylinder (11) une eine darin angeordnete transparente Hülse (17) aufweist, so dass dazwischen ein ringförmiger Wasserdurchlass gebildet ist, und dass die UV-Lampe (19) innerhalb der Hülse (17) angeordnet ist.

9. Vorrichtung nach Anspruch 8, dadurch gekennzeichnet, dass die Hülse (17) eine Quarzhülse ist.

10. Vorrichtung nach Anspruch 8 oder 9, dadurch gekennzeichnet, dass der radiale Durchlass (18) zwischen der Hülse und dem Zylinder zur intensiven Bestrahlung mit UV-Licht eine radiale Dicke von annähernd 1,27 cm (1/2") oder kleiner aufweist.

11. Vorrichtung nach Anspruch 10, dadurch gekennzeichnet, dass die UV-Lampe (19) ungefähr 76 cm (30") lang ist und eine UV-Leistung von ca. 13,8 W besitzt.

12. Vorrichtung nach einem der Ansprüche 7 bis 11, dadurch gekennzeichnet, dass Einrichtungen (37, 38) zur Messung und Anzeige einer Eigenschaft des zirkulierenden Wassers zur Bestimmung des Niveaus organischen Materials im Wasser vorgesehen sind.

13. Vorrichtung nach einem der Ansprüche 7 bis 12, dadurch gekennzeichnet, dass die Oxidationskammer (11) zur Berührung des darin spülenden Wassers eine Oberfläche aus im wesentlichen Titan enthält.

14. Vorrichtung nach einem der Ansprüche 7 bis 13, dadurch gekennzeichnet, dass zwei Ionenaustauscherharz enthaltende Kessel (45, 46) zueinander parallel angeordnet sind, wobei Einrichtungen (48—55) vorgesehen sind, so dass die Einrichtung zum Durchleiten von zu reinigendem Wasser betätigbar ist, um solches Wasser durch einen der Kessel durchzuleiten, während der andere Kessel durch die Spüleinrichtung konditioniert und eine Zirkulation des gereinigten Spülwassers durch sie hindurch verursacht wird.

**Revendications**

1. Procédé d'oxydation de matières organiques dans lequel on fait circuler de l'eau pour transporter la matière organique au travers d'une irradiation à la lumière ultraviolette de 185 nm dans une chambre d'oxydation (10) afin d'oxyder le carbone de la matière organique essentiellement en dioxyde de carbone, puis on fait passer l'eau dans une résine échangeuse d'ions dans un récipient (30, 31) pour absorber le dioxyde de carbone, caractérisé en ce que le procédé est utilisé pour retirer la matière organique de la résine échangeuse d'ions afin de conditionner la résine pour réemploi en chassant la matière organique de la résine échangeuse d'ions au moyen de l'eau qui est ensuite conduite à traverser la chambre d'oxydation (10) pour donner le dioxyde de carbone, la circulation d'eau se poursuivant jusqu'à ce que le niveau de matière organique entraînée dans l'eau s'écoulant du récipient soit tombé à une niveau prédéfini voulu.

2. Procédé selon la revendication 1, dans lequel le dioxyde de carbone est extrait de l'eau par le fait qu'il est adsorbé par la résine.

3. Procédé selon la revendication 1 ou 2, dans lequel le niveau de carbone organique total de l'eau est suivi pour déterminer le moment où le niveau prédéfini voulu est atteint.

4. Procédé selon la revendication 2 ou 3, dans lequel la résistivité de l'eau est suivie pour déterminer le moment où ce niveau prédéfini voulu est atteint.

5. Procédé selon l'une quelconque des revendications précédentes dans lequel l'eau est exposée à une étendue de surface importante de titane pendant l'étape d'oxydation tout en étant exposée à la lumière ultraviolette.

6. Procédé selon l'une quelconque des revendications précédentes, dans lequel le récipient (45) contenant la résine échangeuse d'ions est l'un des deux récipients de ce type (45, 46), et, tandis que l'un (45) des récipients est en cours de conditionnement pour en retirer la matière organique, l'autre récipient (46) est utilisé pour extraire les contaminants d'un courant d'eau distinct à purifier qui le traverse.

7. Système de purification de l'eau comprenant des moyens (40—43, 48, 50, 52, 54) pour faire passer de l'eau à purifier à travers un récipient (46) contenant une résine échangeuse d'ions pour en retirer les contaminants, caractérisé par la présence de moyens (10a, 47, 49, 51, 53, 54) pour le conditionnement de la résine échangeuse d'ions par extraction de la matière organique qu'elle contient, lesdits moyens de conditionnement comprenant des moyens (47, 49, 51, 53, 55) pour chasser de l'eau purifiée au travers de ladite résine échangeuse d'ions à un moment où elle n'est plus en liaison avec les moyens (40, 43, 48, 50, 52, 54) pour y faire passer l'eau à purifier, lesdits moyens de chasse étant aussi agencées pour faire passer l'eau sortant de la résine dans une chambre d'oxydation (10a) avec retour à la résine, ladite chambre d'oxydation comprenant une lampe à ultraviolets (19) adaptée pour irradier l'eau qui traverse la chambre par une lumière ultraviolette de 185 nm, la matière organique transportée par l'eau étant ainsi oxydée essentiellement en dioxyde de carbone.

8. Système selon la revendication 7, dans lequel ladite chambre d'oxydation (10a) est composée d'un cylindre (11) contenant un manchon transparent (17) pour former entre eux un passage annulaire (18) pour l'eau et la lampe à ultraviolets (19) est positionnée à l'intérieur dudit manchon (17).

9. Système selon la revendication 8, dans lequel ledit manchon (17) est un manchon de quartz.

10. Système selon la revendication 8 ou 9, dans lequel ledit passage annulaire (18) présente une épaisseur radiale, du manchon au cylindre d'environ 1,27 cm (1/2") ou moins, pour produire une exposition intense à la lumière ultraviolette.

11. Système selon la revendication 10, dans lequel ladite lampe à ultraviolets (19) a environ 76 cm (30") de longueur et une puissance d'environ 13,8 watts ultraviolets.

12. Système selon l'une quelconque des revendications 7 à 11, dans lequel des moyens (37, 38) sont prévus pour la mesure et la surveillance d'une caractéristique de l'eau en circulation pour déterminer le niveau de matière organique dans l'eau.

13. Système selon l'une quelconque des revendications 7 à 12, dans lequel ladite chambre d'oxydation (11) comprend une étendue de surface importante formée de titane pour qu'il soit en contact avec l'eau de chasse.

14. Système selon l'une quelconque des revendications 7 à 13, dans lequel deux récipients contenant la résine échangeuse d'ions (45, 46) sont prévus en parallèle, des moyens (48—55) étant prévus par lesquels les moyens pour faire passer l'eau à purifier peuvent opérer de manière à faire passer l'eau dans l'un des récipients tandis que l'autre récipient est en cours de conditionnement par le moyen de chasse, obligeant l'eau purifiée de chasse à y circuler en le traversant.

FIG.2.

FIG.1.

FIG.3.

FIG.4.